# EUROPEAN PATENT APPLICATION

(11) **EP 4 178 063 A1**
(43) Date of publication of application: **10.05.2023**
(21) Application number: 22204787.0
(22) Date of filing: 31.10.2022
(51) Int. Cl.: H02J 3/14, H02J 13/00

(54) **DISPLAY UNIT**

(30) Priority: 09.11.2021 JP 2021182675; 09.09.2022 JP 2022143385
(71) Applicant: Yanmar Holdings Co., Ltd., Osaka-shi, Osaka (JP)
(72) Inventor: SASAKI, Tsubasa, Osaka (JP); TOGASHI, Taichi, Osaka (JP); TEI, Masaya, Osaka (JP)
(74) Representative: Novagraaf International SA

(57) **Abstract**

[Problem]

Provide a technology that can improve convenience of a management system that manages energy.

[Solution]

An exemplary display unit is a display unit of a management system that manages energy, wherein the management system has a plurality of setting patterns, and displays a setting screen that switches between the plurality of the setting patterns for each pattern and is capable of displaying a setting pattern of the setting patterns.

## Description

### TECHNICAL FIELD

The present invention relates to a display unit.

### BACKGROUND ART

Conventionally, an electric/heat energy network is known in which electric energy and heat energy are fused together (see, for example, Patent Document 1). The electric/heat energy network connects, for example, a cogeneration system, a renewable energy source, an electricity storage portion, a heat storage portion, a power supply network, a heat energy supply system, a power load, and a heat load. Optimization of an energy management of the electric/heat energy network is executed by a control unit (computer).

### PRIOR ART DOCUMENT

### PATENT DOCUMENT

Patent Document 1: Japanese Patent No. 6423967

### SUMMARY OF INVENTION

### TECHNICAL PROBLEM

The control unit for the energy management of the electric/heat energy network is equipped with an input unit and a display unit as manmachine interfaces. The display unit shows various entry screens, etc. By the way, when executing an operation control that uses the control unit, a control method, etc. is usually set in advance while viewing a screen displayed by a display unit. For example, it is useful to improve an operability of a setting executed while viewing a display screen. Further, for executing the optimum operation control, which accords to a customer's desire, by using the control unit, operation settings such as an energy fee setting and a setting regarding load information by time are required. Failing to properly execute the operation settings may fail to execute the optimum operation control. Further, it is useful to be able to easily execute the operation setting.

An object of the present invention is to provide a technology that can improve convenience of a management system that manages energy.

### SOLUTION TO PROBLEM

An exemplary display unit of the present invention is a display unit of a management system that manages energy, wherein the management system has a plurality of setting patterns, and displays a setting screen that switches between the plurality of the setting patterns for each pattern and is capable of displaying a setting pattern of the setting patterns. Another example of an exemplary display unit is a display unit of a management system that manages energy, wherein the display unit displays a schedule setting screen that enables a setting of an operation schedule for each device of the management system.

### ADVANTAGEOUS EFFECTS OF INVENTION

The exemplary invention makes it possible to improve convenience of a management system that manages energy.

### BRIEF DESCRIPTION OF DRAWINGS

Fig. 1 is an image diagram of a management system.
Fig. 2 is a block diagram of a system controller.
Fig. 3 is a schematic diagram showing a state of displaying a login screen on a screen of a display unit.
Fig. 4 is a schematic diagram showing a state of displaying a home screen on the screen of the display unit.
Fig. 5 is a schematic diagram showing a state of displaying an operation setting screen on the screen of the display unit.
Fig. 6 is a schematic diagram showing an example of the screen seen when a batch button is selected on a load setting screen.
Fig. 7 is a schematic diagram showing a state of displaying a fee setting screen on the screen of the display unit.
Fig. 8 is a schematic diagram showing an example of the screen seen when a period setting button is selected on the fee setting screen.
Fig. 9 is a schematic diagram showing a state of displaying a calendar screen on the screen of the display unit.
Fig. 10A is a diagram describing a procedure for setting any of setting patterns for each day using the calendar screen.
Fig. 10B is a diagram describing the procedure for setting any of the setting patterns for each day using the calendar screen.
Fig. 11 is a schematic diagram showing a load setting screen of a modified example.
Fig. 12 is a schematic diagram showing a state of displaying an estimated reason display screen on the screen of the display unit of the modified example.
Fig. 13 is a schematic diagram showing a calendar screen of another modified example.
Fig. 14 is a schematic diagram showing a state of displaying an operation planning screen on the screen of the display unit.
Fig. 15 is a diagram for describing an overview of a relation between control methods.
Fig. 16 is a schematic diagram showing a state of displaying a schedule setting screen on the screen of the display unit.
Fig. 17 is a diagram for describing the relation between the schedule setting screen and the device management screen.

### DESCRIPTION OF EMBODIMENTS

The following is a detailed description of an exemplary embodiment of the present invention with reference to the drawings.

### <1. Management System>

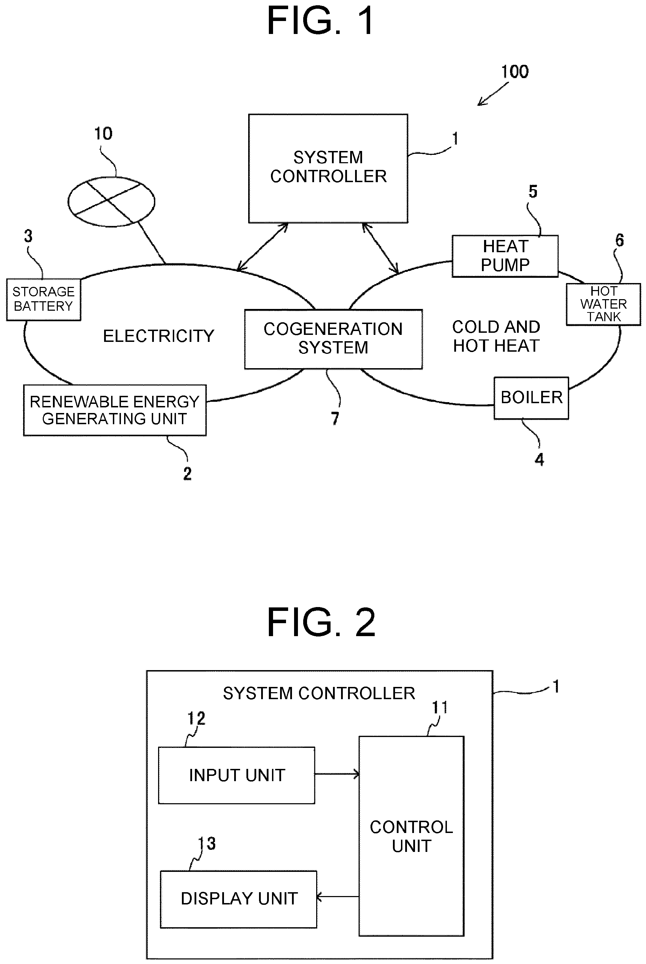

Fig. 1 is an image diagram of a management system 100 according to an embodiment of the present invention. The management system 100 manages energy. That is, the management system 100 is an energy management system. In detail, the management system 100 manages electric energy and heat energy. The management system 100 is applied, for example, to a residential facility, an industrial facility, or a residential/industrial facility.

As shown in Fig. 1, the management system 100 includes a system controller 1. The management system 100 manages electric energy and heat energy, centered on the system controller 1. The management system 100 includes a facility that is so provided as to supply electric power (electricity-related facility) and a facility that is so provided as to supply at least one of hot heat and cold heat (heat-related facility). These facilities (devices) are controlled by the system controller 1.

Note that the hot heat refers to heat that is hot, and the cold heat refers to heat that is cold. That is, when the heat is distinguished into hot heat and cold heat, the hot heat is hot heat and the cold heat is cold heat. For example, the hot heat is air with a higher temperature compared to the room temperature, and the cold heat is air with a lower temperature compared to the room temperature. The facilities shown in Fig. 1 are merely an exemplification and may be changed to a configuration lacking any of the facilities shown in Fig. 1 or to a configuration with an additional facility not shown in Fig. 1.

In the example shown in Fig. 1, the management system 100 includes a renewable energy generating unit 2 and a storage battery 3 each as the electricity-related facility described above. The renewable energy generating unit 2 and the storage battery 3 operate under the control of the system controller 1.

The renewable energy generating unit 2 is a unit that generates electricity using renewable energy such as solar light, wind power, hydraulic power, and geothermal power, for example. The renewable energy generating unit 2 may be, for example, a solar power or wind power generating unit. To a power supply line of the management system 100, the renewable energy generating unit 2 can supply the power obtained from the power generation. The storage battery 3 stores power generated by a power generation facility such as the renewable energy generating unit 2, for example, and discharges the stored power as needed. That is, the storage battery 3 can supply power to the power supply line of the management system 100. The storage battery 3 may be, for example, a lithium-ion battery.

The management system 100 is connected to a power system 10. The power system 10 is a large commercial power system that supplies power to a power-receiving facility of the management system 100. The management system 100 can purchase electricity from the power system 10 and receive the power supply. The system controller 1 is so provided as to control whether or not to receive power supply from the power system 10. The system controller 1 may be so provided as to control whether or not power is supplied to the power system 10.

In the example shown in Fig. 1, the management system 100 includes, as the heat-related facilities described above, a boiler 4, a heat pump 5, and a hot water tank 6. The boiler 4, the heat pump 5, and the hot water tank 6 operate under the control of the system controller 1.

To a heat supply line of the management system 100, the boiler 4 can supply the steam or hot water's heat energy obtained by combustion of gas or other fuels. Th heat pump 5 operates an engine fueled by a gas fuel or the like thereby to drive a compression unit for compressing a refrigerant, providing temperature control by the condensation or evaporation heat of the refrigerant. Here, the temperature control is, for example, the temperature control of the air in a room, etc. when the heat pump 5 is applied to an air conditioner, or the temperature control of a chiller circulating liquid when the heat pump 5 is applied to a chiller. The circulating liquid is typically water as an exemplification. The heat pump 5 can perform cooling operation to cool the temperature-controlled object and heating operation to heat the temperature-controlled object. That is, the heat pump 5 can switch between hot heat and cold heat, and supply the hot heat or the cold heat to the heat supply line of the management system 100. The hot water tank 6 is connected to the boiler 4, etc. and is capable of exchanging the water medium in the tank to hot water and storing hot heat. The heat stored in the hot water tank 6 can be supplied to the heat supply line of the management system 100.

In the example shown in Fig. 1, the management system 100 includes a cogeneration system 7 as a facility that is commonly used for the electricity-related facility and heat-related facility described above. The cogeneration system 7 operate under the control of the system controller 1. The cogeneration system 7 uses gas fuel or the like thereby to drive the engine, and generates electricity using a generator that is operated by the driving of the engine. The power generated by the generator can be supplied to the power supply line of the management system 100. To the heat supply line of the management system 100, the cogeneration system 7 can supply the steam or hot water's heat energy obtained by a waste heat recovery boiler that uses the heat (waste heat) generated by the engine.

To a power load included in the management system 100, power is supplied from the renewable energy generating unit 2, the storage battery 3, the power system 10, or the cogeneration system 7. The power load includes, for example, an electric light and various types of electric devices. To a heat load included in the management system 100, the hot heat or cold heat from the boiler 4, the heat pump 5, the hot water tank 6, or the cogeneration system 7 is supplied. The heat load includes, for example, a cooling unit, a heating unit, a refrigerator, a freezer, a hot water tank, etc.

### <2. System Controller>

Fig. 2 is a block diagram of the system controller 1 according to the embodiment of the present invention. As shown in Fig. 2, the system controller 1 has a control unit 11, an input unit 12, and a display unit 13. That is, the management system 100 has the display unit 13. The management system 100 further has the control unit 11 and the input unit 12.

The control unit 11 controls the entire management system 100. The control unit 11 is so configured as to include an arithmetic operation integrated circuit such as a CPU, a RAM (Random Access Memory), a ROM (Read Only Memory), etc. With the arithmetic operation integrated circuit such as the CPU executing an arithmetic processing that accords to a computer program stored in a memory such as ROM, the control unit 11 executes various functions.

The input unit 12 is so provided as to allow inputting of a command to the control unit 11. The input unit 12 includes at least one of a touch screen, a keyboard, a mouse, a touch pad, a button, and a rotary knob, for example. For example, when the input unit 12 is the touch screen, the input unit 12 and the display unit 13 may be an integrated unit. The integrated unit may also include the control unit 11.

The display unit 13, under the control of the control unit 11, displays a screen that displays various information related to the management system 100, and an entry screen for giving the command to the control unit 11. The display unit 13 is composed of, for example, a liquid crystal panel or an organic EL panel. The display unit 13 may include the touch screen, in which case the display unit 13 doubles as the input unit 12, as described above. The display unit 13 may be placed near or remote to the various devices of the management system 100. That is, the configuration of the present embodiment includes that the display unit 13 is remote to each device.

### <3. Screen Display of Display Unit>

Next, a display on the screen of the display unit 13 will be described in detail.

### (3-1. Overview of Screen Display)

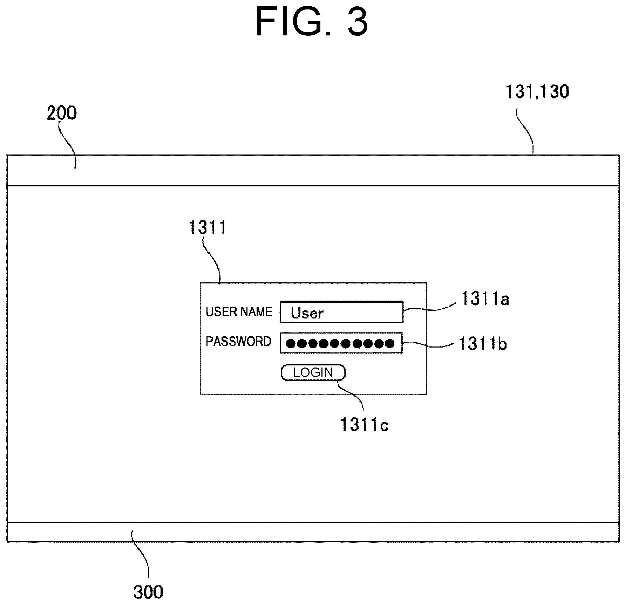

Fig. 3 shows a schematic diagram showing a state of displaying a login screen 131 on a screen 130 of the display unit 13. A person (user) who attempts to access the management system 100 is first required to enter predetermined information on the login screen 131. That is, the screen for displaying various information related to the management system 100, the entry screen for entering the command to the control unit 11, and the like cannot be viewed without the user entering necessary information in the login screen 131.

In the present embodiment, as shown in Fig. 3, the login screen 131 has a login information entry area 1311. The login information entry area 1311 has a user name entry area 1311a for entering the user name, a password entry area 1311b for entering a password preliminarily associated with the user name, and a login button 1311c. That is, on the login screen 131, the user is required to enter the user name and the password.

The user name and the password are entered using, for example, the keyboard or the touch screen. In a configuration using the touch screen or mouse for entering, it may be so configured that the entering is executed using a software keyboard (virtual keyboard) that appears within the login screen 131. The software keyboard may be, for example, so configured as to appear in the login screen 131 when the user touches or clicks the user name entry area 1311a or the password entry area 1311b. A similar software keyboard may be used to enter letters and numbers on any type of screen other than the login screen 131.

In the present embodiment, the top end portion of the login screen 131 has a header area 200 that extends in the right/left direction of the screen 130. In addition, the bottom end portion of the login screen 131 has a footer area 300 that extends in the right/left direction of the screen 130. The header area 200 and the footer area 300 are properly displayed on any type of screen other than the login screen 131. The header area 200 displays, for example, a company logo, a menu related to the screen display, and the like. The footer area 300 displays, for example, time, a user name allowed to log in, and the like.

Operating the login button 1311c by touch or the like after the user name and the password are entered displays a home screen 132. When at least one of the user name and the password is improper, an error message is displayed on the login screen 131, failing to display the home screen 132.

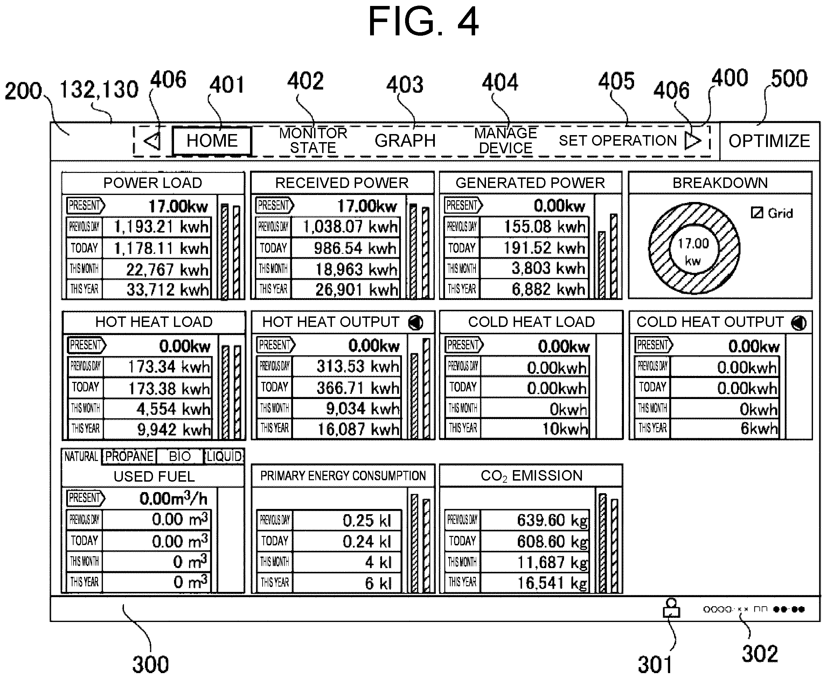

Fig. 4 is a schematic diagram showing a state of displaying the home screen 132 on the screen 130 of the display unit 13. In the present embodiment, the home screen 132 is a screen designed to allow the supply and demand of the electric energy and heat energy in the management system 100 to be viewed at a glance. In the example shown in Fig. 4, the home screen 132 has the header area 200. The header area 200 includes a menu area 400 that shows the type of screen display that can be selected. In the present embodiment, the menu area 400 includes a home button 401, a status monitoring button 402, a graph button 403, a device management button 404, and an operation setting button 405. The touch screen, mouse, or keyboard, for example, may be used to operate each of the buttons 401 to 405.

In the example shown in Fig. 4, the home screen 132 is in a selected state, so a selection display is provided to show the above selected state. In detail, a frame surrounding the home button 401 is displayed as the selection display. However, the selection display is not limited to the frame surrounding the button, but may be configured otherwise, such as a configuration of making a button different in color from another button, or a configuration of making a button different in hatching from another button.

Selecting the status monitoring button 402 displays a status monitoring screen. The status monitoring screen displays details of an operating status of each device included in the management system 100. Each device includes the heat and electric devices. The heat device includes, for example, the heat-related facility described above (including a facility that is used also for the electricity-related facility) and the heat load (air conditioning facility, footbath facility, etc.). The electric device includes, for example, the electricity-related facility (including a facility that is used also for heat-related facility) and the power load described above.

Selecting the graph button 403 displays a graph screen. The graph screen displays, for example, a graph or the like showing the shift in magnitude of the hourly heat and power loads for one day as well as a breakdown of each device's output relative to the load.

Selecting the device management button 404 displays a device management screen. The device management screen displays device management information including input/output information of each device.

Selecting the operation setting button 405 displays an operation setting screen. The operation setting screen includes an entry screen for entering information related to the operation of the management system 100. The information related to the operation includes information about the control method of the management system 100. In the present embodiment, it is so configured that the operation setting screen can select whether an optimization control and a demand control are enabled or disabled.

The optimization control is a control method in which control is executed according to an optimization target selected by the user (typical example is a customer) using the management system 100. The optimization targets include, for example, the cost priority which prioritizes the reduction of various fees borne by the user, the carbon dioxide emission priority which prioritizes the reduction of carbon dioxide emission generated by the device operation, and the primary energy consumption priority which prioritizes the reduction of primary energy consumption required for the device operation. In the present embodiment, the user can select any one of these three optimization targets. The user, when selecting the cost priority, executes the operation control prioritizing the cost reduction, assuming that the optimization control is set to be enabled. The user, when selecting the carbon dioxide emission priority, executes the operation control prioritizing the reduction of carbon dioxide emission, assuming that the optimization control is set to be enabled. The user, when selecting the primary energy consumption priority, executes the operation control prioritizing the reduction of primary energy consumption, assuming that the optimization control is set to be enabled.

The demand control is a control method that so controls the device included in the management system 100 that the power received from the power system 10 does not exceed the target demand value. The target demand value is set at the contract power or less. When the optimization control and the demand control are set to be enabled, in principle, the management system 100 operates by the optimization control, and when the power received approaches the target demand value, the management system 100 switches to the demand control.

As can be seen from the above description, the display unit 13 can display the information, which is managed by the management system 100, by switching to multiple types of screens. In the example shown in Fig. 4, it is possible to switch to at least five different screens including the home screen, the status monitoring screen, the graph screen, the device management screen, and the operation setting screen. However, these screen displays are merely an exemplification, and the types of screens that can be displayed by the display unit 13 may be changed as needed.

In the example shown in Fig. 4, the menu area 400 includes a feed button 406. Operating the feed button 406 by touch or the like switches the type of screen type selection button displayed in the menu area 400. That is, the example shown in Fig. 4 can display any screen other than the five types including the home screen, the status monitoring screen, the graph screen, the device management screen, and the operation setting screen. Examples of screens other than the five types described above include a user management screen for entering user information, and a screen setting screen for setting a screen-related condition.

In the example shown in Fig. 4, the home screen 132 has the footer area 300. The footer area 300 includes an icon area 301 showing the user name and a time information area 302 including date and time. In the present embodiment, operating the icon area 301 by touch or the like can execute logout. As a preferred configuration, operating the icon area 301 displays a confirmation screen on the screen in a pop-up manner to confirm whether or not the logout may be executed, and the confirmation screen allowing the logout executes the logout.

In the present embodiment, as a preferred form, the various screens that can be selected by the menu area 400, such as the home screen 132, further includes a control state display area 500 that shows the control state of the management system 100. With the above configuration; on the screen capable of grasping various types of information, the user can simultaneously obtain information on the control state of the management system 100. That is, user convenience can be improved.

In the embodiment, the control state display area 500 is included in the header area 200. In detail, the control state display area 500 is placed to the right of the menu area 400. However, the position of the control state display area 500 may be changed as needed. In the example shown in Fig. 4, "Optimization" is displayed in the control state display area 500. This shows that the management system 100 is being operated under the optimization control described above. In addition to this, "Demand Control", "Stopped", etc. are displayed in the control state display area 500, for example.

### (3-2. Operation Setting Screen)

### [3-2-1. Overview of Operation Setting Screen]

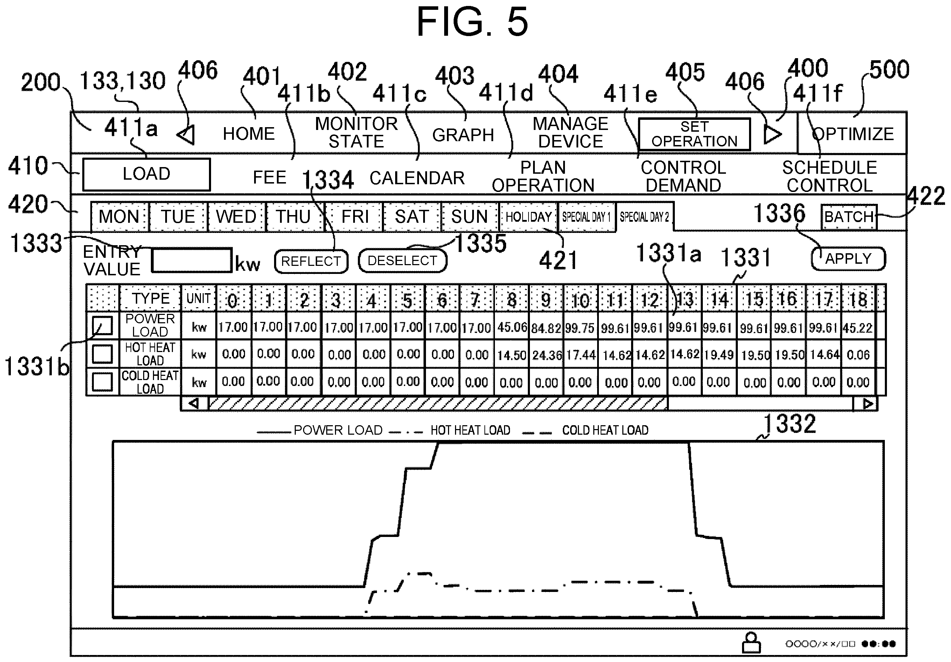

Fig. 5 is a schematic diagram showing a state of displaying an operation setting screen 133 on the screen 130 of the display unit 13. By touch or the like, operating the operation setting button 405 displayed in the menu area 400 can select the operation setting screen 133.

In detail, the operation setting screen 133 includes a sub-menu area 410. The operation setting screen 133 displays a content that accords to a button selected from buttons 411a, 411b, 411c, 411d, 411e, and 411f displayed in the sub-menu area 410. In the present embodiment, the buttons displayed in the sub-menu area 410 of the operation setting screen 133 include a load button 411a, a fee button 411b, a calendar button 411c, an operation planning button 411d, a demand control button 411e, and a schedule control button 411f. Fig. 5 shows the screen seen when the load button 411a is selected.

In the present embodiment, when any screen other than the operation setting screen 133 (for example, the home screen 132) is displayed, selecting the operation setting button 405 automatically selects a specific button that is any of the multiple buttons 411a-411e displayed in the sub-menu area 410, and displays the screen that corresponds to the selected button. Which button is to be designated as the specific button may be determined properly. For example, when the load button 411a is designated as the specific button, selecting the operation setting button 405 automatically selects the load button 411a, displaying the screen for setting the load.

By the way, the energy demand in the management system 100 is not always the same every day and usually fluctuates. Meanwhile, daily energy demand tends to be similar for the same type of day. With the above in mind, the present embodiment is so configured that, for the daily operation of the management system 100, any of the multiple patterns classified according to the type of day is used. That is, the management system 100 has a plurality of setting patterns. The types of days are, for example, each day of the week, a holiday, a weekday, etc. that make up one week. In the present embodiment, it is so configured that the display unit 13 displays a setting screen (operation setting screen) 133 that switches between a plurality of setting patterns for each pattern and is capable of displaying a setting pattern of the setting patterns.

This configuration allows the daily operation setting of the management system 100 to be determined by selecting from any of the plurality of setting patterns, thus while reducing the burden of operation setting of the management system 100, making it possible to properly operate the management system 100. Each of the plurality of setting patterns can be displayed on a separate screen, making it easier to check and enter information for each setting pattern.

In detail, as shown in Fig. 5, the operation setting screen 133 has a tab area 420 below the sub-menu area 410. The tab area 420 displays ten different setting pattern tabs 421 including "Mon", "Tue", "Wed", "Thu", "Fri", "Sat", "Sun", "Holiday", "Special Day (1)", and "Special Day (2)". "Mon," "Tue," "Wed," "Thu," "Fri," "Sat," and "Sun" are the types of days of the week, respectively. For example, "Mon" is Monday.

Selecting the Monday tab out of the 10 setting pattern tabs 421 displays a Monday pattern. Selecting the Tuesday tab displays a Tuesday pattern. Selecting the Wednesday tab displays a Wednesday pattern. Selecting the Thursday tab displays a Thursday pattern. Selecting the Friday tab displays a Friday pattern. Selecting the Saturday tab displays a Saturday pattern. Selecting the Sunday tab displays a Sunday pattern. Selecting the Holiday tab displays a holiday pattern. Selecting the special day (1) tab displays a special day (1) pattern. Selecting the special day (2) tab displays a special day (2) pattern. Fig. 5 shows a screen seen when the special day (2) tab is selected.

That is, in the present embodiment, any of the Monday pattern, the Tuesday pattern, the Wednesday pattern, the Thursday pattern, the Friday pattern, the Saturday pattern, the Sunday pattern, the Holiday pattern, the special day (1) pattern, and special day (2) pattern is applied to the daily operation of the management system 100.

As shown in Fig. 5, the sub-menu area 410 of the operation setting screen 133 displays the load button 411a and the fee button 411b. As can be seen from the above, the operation settings in the present embodiment include the load setting which is related to the load, and the fee setting which is related to the fee. That is, the setting patterns include, in detail, a load setting pattern and a fee setting pattern.

The load includes at least one of the power load and the heat load. The heat load includes at least one of the hot heat load and the cold heat load. In the present embodiment, the loads include the electric power load, the hot heat load, and the cold heat load.

Operating the load button 411a by touch or the like displays a load setting screen. The screen 133, shown in Fig. 5, is the load setting screen. That is, Fig. 5 can be expressed as a schematic diagram showing a state of displaying the load setting screen 133 on the screen 130 of the display unit 13. Further, operating the fee button 411b by touch or the like displays a fee setting screen. That is, the setting screen (operation setting screen) 133 is switched between the load setting screen and the fee setting screen and is capable of displaying the above screens.

Operating the calendar button 411c in the sub-menu area 410 by touch or the like displays a calendar screen. Details of the calendar screen are to be described below. Further, operating the operation planning button 411d by touch or the like displays an operation planning screen. The operation planning screen is an entry screen that allows for selecting of enabling or disabling of the optimizing control and like described above, for example. Details of the operation planning screen are to be described below. By touch or the like, operating the demand control button 411e displays a demand control screen which is an entry screen that enables a detailed setting of the demand control. By touch or the like, operating the schedule control button 411f displays a schedule setting screen which is an entry screen that enables a detailed setting of the schedule control. Details of the schedule setting screen are to be described below.

As can be seen from the above, the operation setting screen 133 can execute displaying by switching between the load setting screen, the fee setting screen, the calendar screen, the operation planning screen, the demand control screen, and the schedule setting screen, in detail. The load setting screen, the fee setting screen, the calendar screen, the operation planning screen, and the schedule setting screen are to be described in detail below.

### [3-2-2. Load Setting Screen]

The load setting screen displays a set value, for a predetermined period, of at least one of the power load, the hot heat load, and the cold heat load. The predetermined time is, for example, every hour. The load set value is an estimate of the magnitude of the load.

As described above, the operation setting screen 133 shown in Fig. 5 exemplifies the load setting screen. As shown in Fig. 5, in the present embodiment, the load setting screen 133 displays hourly set value for the power load, the hot heat load, and the cold heat load. In detail, switching for each load setting pattern, the load setting screen 133 displays hourly set value for the power load, the hot heat load, and the cold heat load. The load setting pattern is switched using the setting pattern tab 421, as described above.

In the example shown in Fig. 5, the special day (2) tab is selected thereby to show the hourly set values for the power load, the hot heat load, and the cold heat load on the special day (2). The screen configuration is similar for each load setting pattern. Due to this, the case in which the special day (2) tab is selected will be described as a representative example.

As shown in Fig. 5, the load setting screen 133 displays a table 1331 below the tab area 420. The set value is displayed in each cell 1331a of the table 1331. Hatched numbers in the table 1331 are the time displayed in the 24-hour system. For example, the hatched number "15" means 15:00. The set value for one day (24 hours) is displayed hourly for each of the power load, the hot heat load, and the cold heat load.

In the example shown in Fig. 5, a graph 1332 is displayed below the table 1331. The horizontal axis of the graph 1332 is time, with 0:00 at the left end and 24:00 at the right end. The vertical axis of the graph 1332 is the load amount expressed in kilowatts. The graph 1332 is a graphical representation of the set values displayed in the table 1331. Displaying the graph 1332 in addition to the table 1331 can make it easier to grasp changes in each load's setting values over time.

The load setting screen 133 is allows for a manual entry of the load set value. When wishing to modify the load set value, for example, the user can easily modify the set value. The manual entry of load set value may be used immediately after the management system 100 is introduced. It may be so configured that, after the initial set value is first entered, the control unit 11 automatically determines the set value according to an operation performance. The user may manually modify the value automatically set by the control unit 11.

In the example shown in Fig. 5, an entry value area 1333 to enter the set value (predicted value) is provided between the tab area 420 and the table 1331. When manually entering the set value for each of the power load, the hot heat load, and the cold heat load, the user, by touch or the like, selects the cell 1331a in which the set value is to be entered. In this case, the user may select one cell 1331a or multiple cells 1331a. With the cell 1331a selected, the user enters the value which the user wishes to be set in the entry value area 1333. After entering the value in the entry value area 1333, the user, by touch or the like, operates a reflection button 1334 displayed next to the entry value area 1333. In the selected cell 1331a, this displays the value entered in the entry value area 1333. By touch or the like, operating a deselection button 1335 displayed on the right of the reflection button 1334 can deselect the cell 1331a. After having completed entering the value in each cell 1331a, the user, by touch or the like, operates an application button 1336 present on the right side away from the deselection button 1335, thereby making it possible to fix the value entered in each cell 1331a.

In the present embodiment, a check box 1331b is displayed at the left end in each of the three load columns shown in the table 1331. Operating the check box 1331b by touch or the like marks (not shown) the check box 1331b, bringing about a state of selecting all of the cells 1331a of the applicable load. That is, using the check box 1331b can collectively enter the values in all the cells 1331a for the check-marked load. This is useful, for example, when multiple identical values are to be entered.

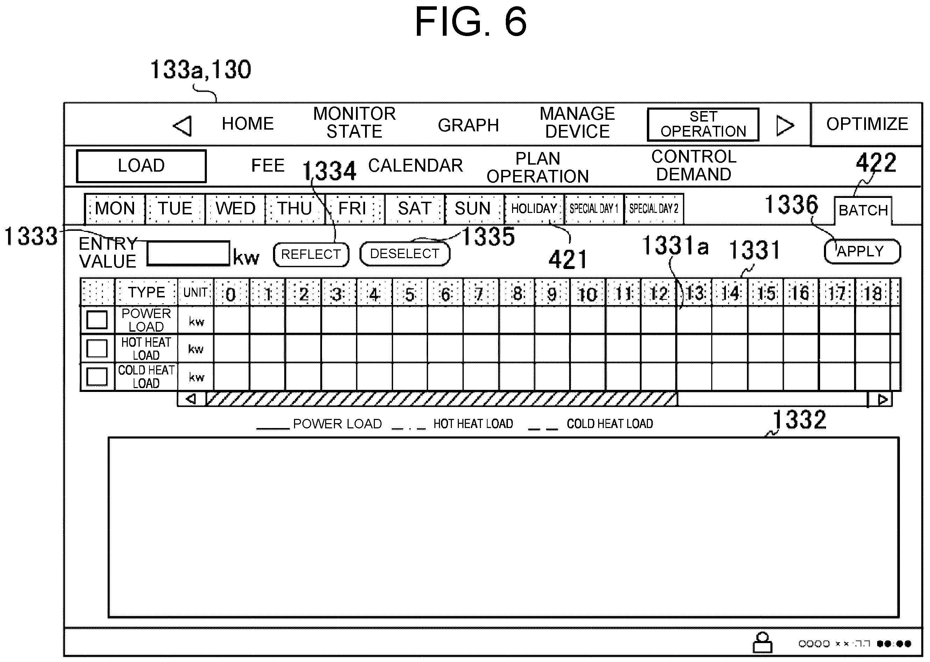

In the present embodiment, a batch button 422 is provided on the right end side of the tab area 420. Fig. 6 is a schematic diagram showing an example of the screen seen when the batch button 422 is selected on the load setting screen 133. The basic configuration of a screen 133a displayed by selecting the batch button 422 is the same as that of the screen configuration (see Fig. 5) seen when any of the setting pattern tabs 421 is selected. However, when the batch button 422 is selected, as shown in Fig. 6, the value in each cell 1331a of the table 1331 will be blank. On the screen 133a displayed by selecting the batch button 422, the user enters the value in the entry value area 1333 in the same manner as described using Fig. 5, thereby making it possible to execute the load setting in a batch for all load setting patterns (10 patterns in the present embodiment, as described above).

That is, the load setting screen 133 displays the batch button 422 that displays the screen 133a that allows the manual entry of the load setting value to be executed in a batch for the plurality of setting patterns (load setting patterns in detail). When there are three types of load settings (power load, hot heat load, and cold heat load) as in the present embodiment, it may be so configured that settings for all load setting patterns are executed in a batch, collectively for all the three types or for multiple types. As another example, it may be so configured that settings of all load setting patterns are executed, separately for all three types.

### [3-2-3. Fee Setting Screen]

The fee setting screen displays a set value, for each predetermined time, of the energy fee required to operate the facility of the management system 100. The predetermined time is, for example, every hour. The energy fees include, for example, electricity and gas fees.

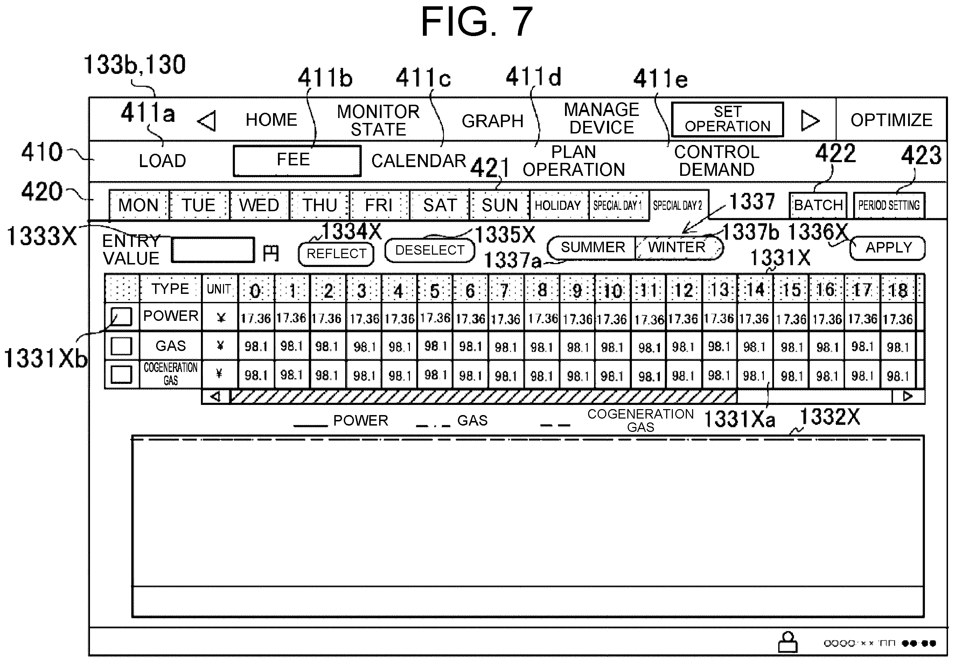

Fig. 7 is a schematic diagram showing a state of displaying a fee setting screen 133b on the screen 130 of the display unit 13. The fee setting screen 133b is displayed when the fee button 411b displayed in the sub-menu area 410 is selected. As shown in Fig. 7, the fee setting screen 133b displays hourly setting values for power, gas, and cogeneration gas. In detail, switching for each fee setting pattern, the fee setting screen 133b, displays hourly set value for power, gas, and cogeneration gas. Switching of the fee setting pattern is executed using the setting pattern tab 421, as described above.

In the example shown in Fig. 7, the special day (2) tab is selected, thereby to show the hourly set values for power, gas, and cogeneration gas on the special day (2). The screen configuration is similar for each fee setting pattern. Due to this, the case in which the special day (2) tab is selected will be described as a representative example.

As shown in Fig. 7, the fee setting screen 133b displays a table 1331X below the tab area 420. Each cell 1331Xa of the table 1331X displays the set value. The hatched numbers in the table 1331X are the time displayed in the 24-hour system. The set value for one day (24 hours) is displayed hourly for each of power, gas, and cogeneration gas.

In the example shown in Fig. 7, a graph 1332X is displayed below the table 1331X. The horizontal axis of the graph 1332X is time, with 0:00 at the left end and 24:00 at the right end. The vertical axis of the graph 1332X is the fee. In the example shown in Fig. 7, the unit of the fee is yen. The graph 1332X is a graphical representation of the set value displayed in the table 1331X. Displaying the graph 1332X in addition to the table 1331X can make it easier to grasp the changes in each fee's set values over time.

The fee setting screen 133b allows for a manual entry of the fee set value. When wishing to modify the fee set value, for example, the user can easily modify the set value. In the present embodiment, both the load setting screen 133 and the fee setting screen 133b allow for the manual entry of the set value. However, this is an exemplification, and it may be so configured that at least one of the load setting screen 133 and the fee setting screen 133b is a screen to allow for the manual entry of the set value.

In addition, since being the same as for the load setting screen 133, the procedure for entering the set value using an entry value area 1333X, a reflection button 1334X, a deselection button 1335X, and an application button 1336X is omitted here. In addition, on the fee setting screen 133b as well, as in the case of the load setting screen 133, using a check box 1331Xb can collectively enter the values in all the cells 1331Xa for the fee of the check-marked item.

Also in the fee setting screen 133b as well, as in the case of the load setting screen 133, the batch button 422 is provided at the tab area 420. Using the screen displayed by the batch button 422 makes it possible to set all fee setting patterns (10 patterns in the present embodiment as described above) in a batch. That is, the fee setting screen 133b displays the batch button 422 that displays the screen that allows the manual entry of the fee setting value to be executed in a batch for the plurality of setting patterns (fee setting patterns in detail).

When there are three types of fee settings as in the present embodiment, it may be so configured that settings for all fee setting patterns are executed in a batch, collectively for all the three types or for multiple types. As another example, it may be so configured that settings of all fee setting patterns are executed in a batch, separately for all three types.

In the present embodiment, the batch button is displayed on both the load setting screen 133 and the fee setting screen 133b, which is merely an exemplification. It may be so configured that at least one of the load setting screen 133 and the fee setting screen 133b displays the batch button.

In addition, in the present embodiment, the fee setting screen 133b displays a season selection button 1337 that selects between a summer screen and a winter screen. This takes into account the fact that the electricity and gas pricing may change depending on the season.

As shown in Fig. 7, the season selection button 1337 includes a summer selection area 1337a and a winter selection area 1337b. In Fig. 7, the summer selection area 1337a is selected. Selecting the summer selection area 1337a displays, in the table 1331X and the graph 1332X, a screen reflecting a summer set value. Also, the user can enter the summer set value by selecting the summer selection area 1337a. Selecting the winter selection area 1337b displays, in the table 1331X and the graph 1332X, a screen reflecting a winter set value. Also, the user can enter the winter set value by selecting the winter selection area 1337b.

In addition, the fee setting screen 133B further displays a period setting button 423 that sets the summer period and the winter period.

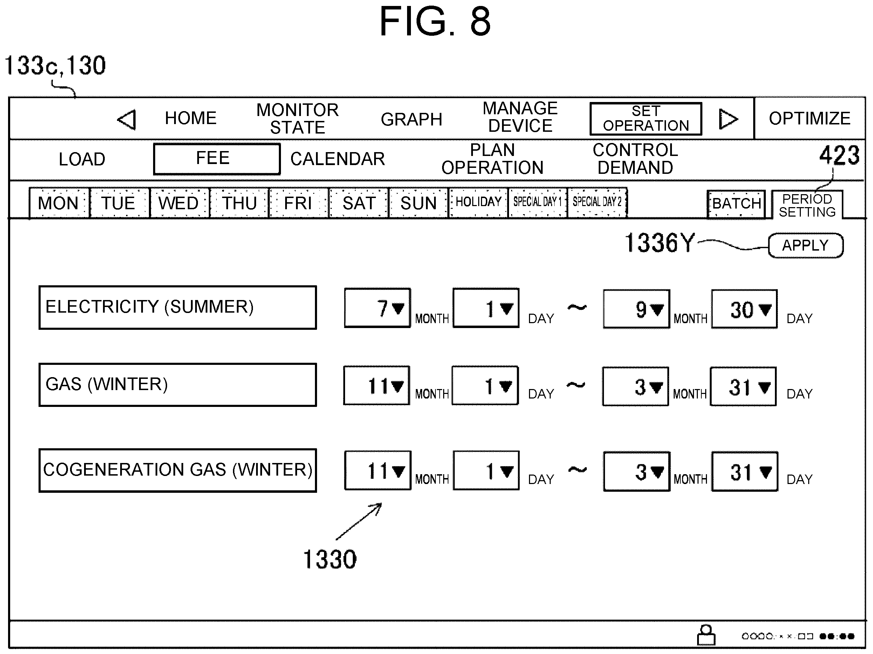

Fig. 8 is a schematic diagram showing an example of the screen seen when the period setting button 423 is selected on the fee setting screen 133b. The present embodiment allows for the setting of fees for electricity, gas, and cogeneration gas, making it possible to set the period for these three types.

In the example shown in Fig. 8, the summer period can be set for electricity. Other than the summer period is the winter period. In addition, the winter period can be set for gas and cogeneration gas. Other than the winter period is the summer period. After the period has been entered in a period entry area 1330 for each item, operating an application button 1336Y by touch or the like fixes the set period. The electricity and gas fees used to calculate the planned value of the optimization control are determined according to the set period settings.

For electricity, the winter period may be set instead of the summer period. It may be so made that, for gas (including cogeneration gas), the summer period may be settable instead of the winter period. It may be so configured that, for electricity and gas (including cogeneration gas), the summer period and the winter period may be set separately. However, as in the present embodiment, with only one of the summer period and the winter period settable, causing the period other than the set period to be another period can cause less error in the period setting.

### [3-2-4. Calendar Screen]

The display unit 13 further displays a calendar screen that allows for setting, using a calendar, which of the plurality of setting patterns is to be applied on each day. That is, the display unit 13 further displays the calendar screen that allows for, using the calendar, which of the plurality of setting patterns is to be applied to a predetermined day. In the present embodiment, the plurality of setting patterns have ten different setting patterns, as described above.

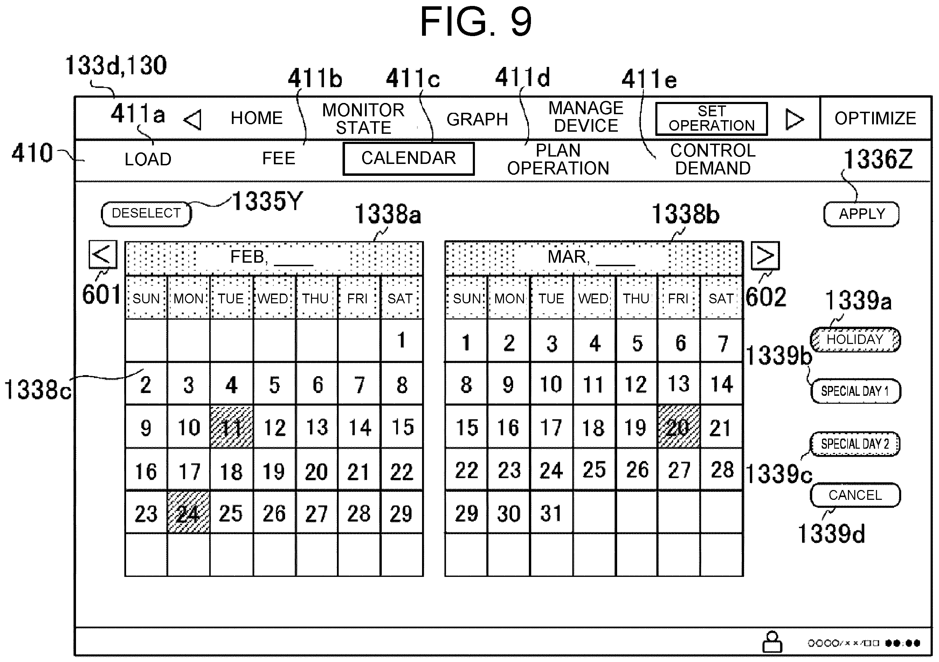

Fig. 9 is a schematic diagram showing a state of displaying a calendar screen 133d on the screen 130 of the display unit 13. The calendar screen 133d is displayed by selecting the calendar button 411c displayed in the sub-menu area 410 in the operation setting screen 133.

In the present embodiment, as shown in Fig. 9, the calendar screen 133d displays a first calendar 1338a and a second calendar 1338b. The second calendar 1338b is a calendar of the month following the first calendar 1338a. By touch or the like, operating a backward month button 601 placed on the left side of the first calendar 1338a, and a forward month button 602 placed on the right side of the second calendar 1338b can change a calendar displayed on the calendar screen 133d.

In the example shown in Fig. 9, the first calendar 1338a is the calendar for February, and the second calendar 1338b is the calendar for March. Operating the backward month button 601 by touch or the like makes the first calendar 1338a the calendar for January, and the second calendar 1338b the calendar of February. Operating the forward month button 602 by touch or the like makes the first calendar 1338a the calendar for March, and the second calendar 1338b the calendar for April. The number of calendars displayed on the calendar screen 133d may be one, three or more. The month unit to be changed by the backward month button 601 and the forward month button 602 may not be one month, but may be two months.

As shown in Fig. 9, the calendar screen 133d displays, on the right side of the second calendar 1338b, four buttons that are positioned apart from the forward month button 602. The four buttons include an application button 1336Z, a holiday button 1339a, a special day (1) button 1339b, a special day (2) button 1339c, and a cancellation button 1339d. In addition, a deselection button 1335Y is displayed on the upper left side of the first calendar 1338a. These six buttons 1335Y, 1336Z, 1339a through 1339d are used to determine the setting pattern to be applied to each day. Note that these six buttons 1335Y, 1336Z, 1339a through 1339d may be rearranged as needed.

Each of the calendars 1338a and 1338b has a rectangular calendar cell 1338c into which each day is entered. The display state of calendar cell 1338c varies depending on the type of the applied setting pattern. In the example shown in Fig. 9, when a day-of-week pattern of the day of the week to which a relevant day entered in the calendar cell 1338c belongs is applied to the relevant day, the background for the black number in the calendar cell 1338c is white. When the day-of-week pattern of the day of the week to which the relevant day belongs is applied, it means, for example, that if the day of the week to which the relevant day belongs is Monday, the Monday pattern is applied as the setting pattern.

When the holiday pattern is applied to the setting pattern, the background for the black number in the calendar cell 1338c is the same as the background for the text in the holiday button 1339a. When the special day (1) pattern is applied to the setting pattern, the background for the black number in the calendar cell 1338c is the same as the background for the text in the special day (1) button 1339b. When the special day (2) pattern is applied to the setting pattern, the background for the black number in the calendar cell 1338c is the same as the background of the text in the special day (2) button 1339c.

According to the calendar screen 133d shown in Fig. 9, to February 3, for example, a pattern of Monday which is the day of the week to which the relevant day belongs (Monday pattern) is applied as the setting pattern. For example, to February 24, the holiday pattern is applied as the setting pattern, instead of the pattern of Monday which is the day of the week to which the relevant day belongs.

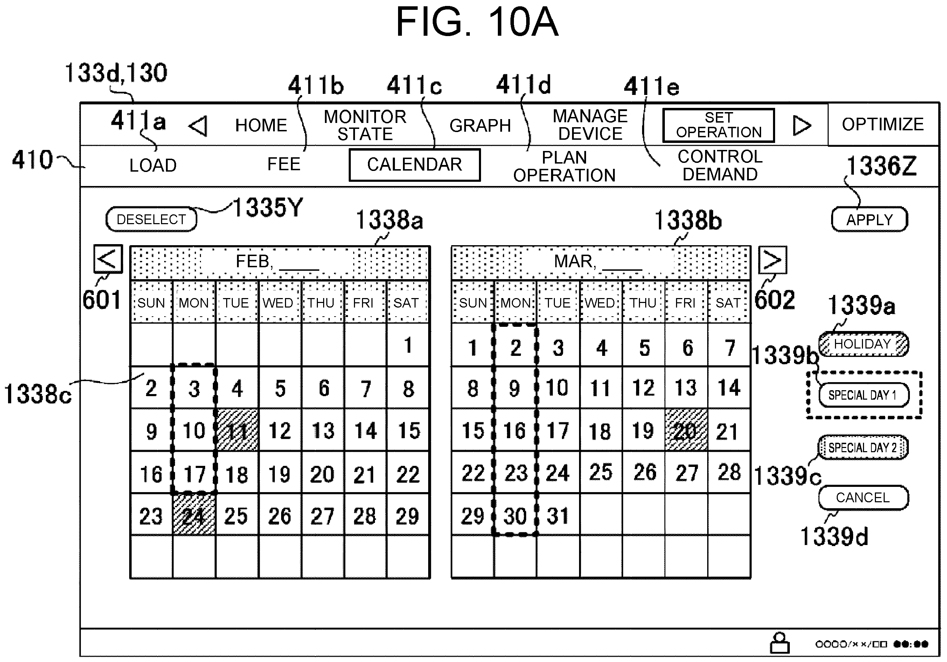

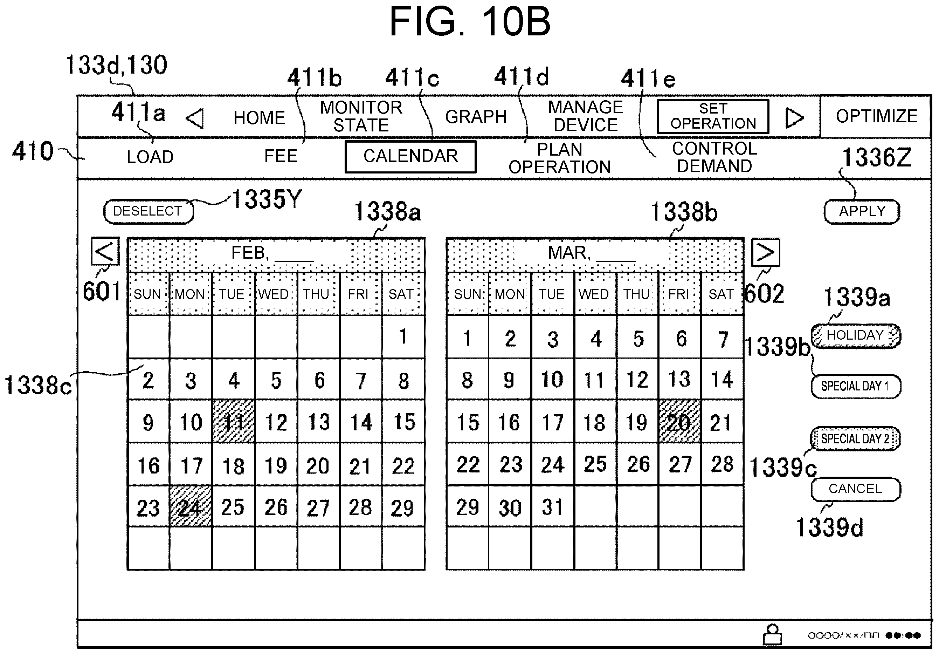

Fig. 10A and Fig. 10B are each a diagram describing a procedure for setting any of the setting patterns for each day using the calendar screen 133d. In detail, Fig. 10A is the diagram in the process of setting, and Fig. 10B is the diagram after setting.

By touch or the like, the user first selects the calendar cell 1338c for the day to be set. In this case, the user may select only one calendar cell 1338c, or multiple calendar cells 1338c. In Fig. 10A, the user has selected multiple calendar cells 1338c. In Fig. 10A, the selected calendar cells 1338c are shown by a dashed frame. In detail, for February, the calendar cells 1338c are selected for the days that belong to Mondays except the 24th, and for March, all calendar cells 1338c for the days that belong to Mondays are selected. The selection can be canceled by operating the deselection button 1335Y.

With the calendar cells 1338c selected, the user select any of the holiday button 1339a, the special day (1) button 1339b, the special day (2) button 1339c, and the cancellation button 1339d. In Fig. 10A, the special day (1) button 1339b is selected. With the special day (1) button 1339b selected, as shown in Fig. 10B, the currently selected calendar cell 1338c displays the special day (1). Selecting the application button 1336Z in this state fixes the setting pattern for each day.

Note that in the above example, selecting the holiday button 1339a instead of the special day (1) button 1339b causes the selected calendar cell 1338c to display holiday, applying the holiday setting pattern to the day that is displayed as the holiday. In addition, selecting the special day (2) button 1339c instead of the special day (1) button 1339b causes the selected calendar cell 1338c to display the special day (2), applying the special day (2) setting pattern to the day displayed as the special day (2).

By the way, the cancellation button 1339d is used to cancel the setting patterns, which are specially set other than the day of the week, such as the holiday pattern, the special day (1) pattern, and the special day (2) pattern. Due to this, in the previously described example, selecting the cancellation button 1339d instead of the special day (1) button 1339b executes the deselecting without any change to the display of the selected calendar cell 1338c. For example, selecting the cancellation button 1339d with the calendar cell 1338c for February 24 being selected causes the calendar cell 1338c for February 24 to be displayed with a white background for the black number. Then, on February 24, the pattern for Monday, which is the day of the week to which the relevant day belongs (Monday Pattern), will be applied as the setting pattern.

### [3-2-5. Modified Examples]

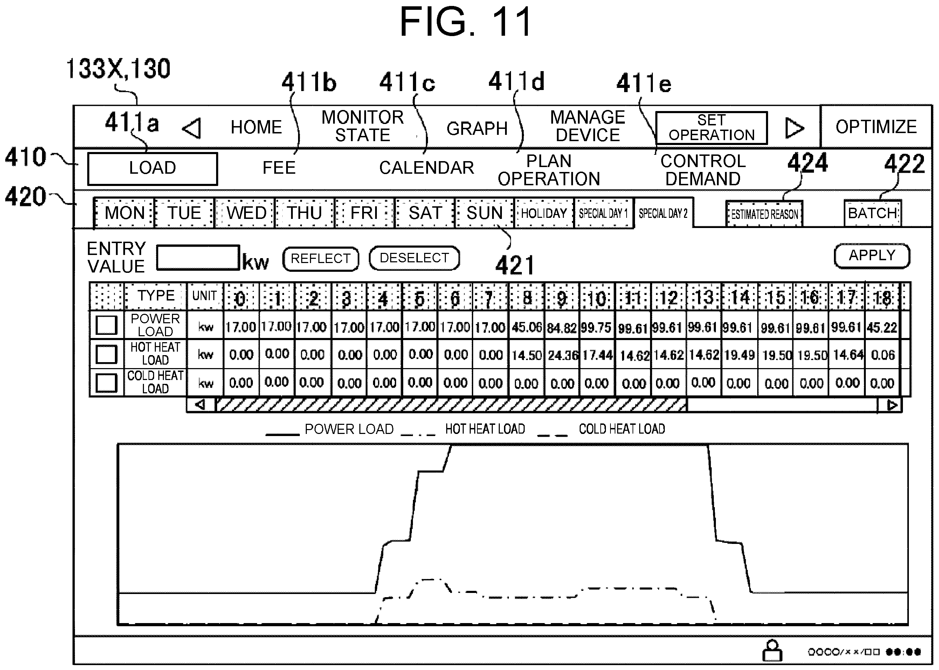

Fig. 11 is a schematic diagram of a load setting screen 133X of a modified example. The load setting screen 133X shown in Fig. 11 is generally the same as the load setting screen 133 shown in Fig. 5 described above. The screen 133X shown in Fig. 11 is displayed as a screen showing an operation setting on the next day. In detail, it is assumed that a state in which the next day is estimated to be the day to which the special day (2) pattern should be applied, selecting the special day (2) tab of the setting pattern tab 421. In displaying an estimated reason button 424 in the tab area 420, the load setting screen 133X shown in Fig. 11 differs from the example shown in Fig. 5.

In the modified example, the management system 100 is so provided as to be able to estimate the setting pattern to be applied at least on the next day. In a preferred form, the management system 100 is so provided as to be able to estimate the load setting pattern to be applied at least on the next day. In the present embodiment, the load setting pattern obtained by the estimation is any of the ten patterns described above. It may be so configured as to estimate only the load setting pattern on the next day, or may be so configured as to estimate the load setting pattern to be applied to multiple days after the next day. The estimation of the load setting pattern to be applied is executed by the control unit 11.

The estimated reason button 424 described above is a button for displaying an estimated reason for the setting pattern to be applied (in this example, the load setting pattern). Operating the estimated reason button 424 by touch or the like displays an estimated reason display screen showing the estimated reason. That is, the display unit in the modified example further displays the estimated reason display screen showing the estimated reason for the setting pattern (in this example, the load setting pattern).

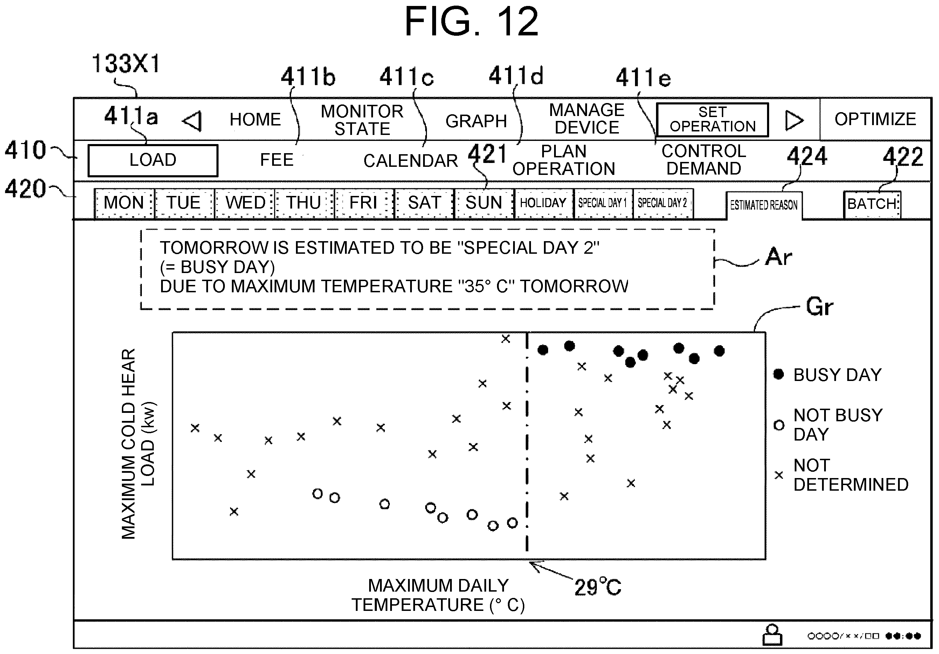

Fig. 12 is a schematic diagram showing a state of displaying an estimated reason display screen 133X1 on the screen 130 of the display unit of the modified example. The estimated reason display screen 133X1 shown in Fig. 12 is a screen displayed with the estimated reason button 424 selected on the screen 133X shown in Fig. 11. As shown in Fig. 12, the estimated reason display screen 133X1 includes an estimated reason display area Ar showing the estimated reason and a graph area Gr showing a graph related to the estimated reason. In the present modified example, the estimated reason display area Ar is the portion that explains the estimated reason by text. The graph area Gr shows, for example, a graph or the like showing the basis for the estimated reason.

In the example shown in Fig. 12, the horizontal axis of the graph shown in the graph area Gr is the maximum daily temperature and the vertical axis is the maximum cold heat load. The graph shown in Fig. 12 plots actual values for several previous days. The graph shows a result of grouping the past performance values by a grouping algorithm using, for example, artificial intelligence (AI). In detail, the grouping is executed based on whether or not the day falls under the special day (2) (e.g., a busy day). Any day that could not be determined whether or not being the special day (2) is classified as being not determined. By whether or not the maximum daily temperature exceeds 29°C, the graph can determine whether or not the day is the special day (2). The example shown in Fig. 12, from the fact that the maximum temperature on the next day is expected to be 35°C and from a determination method that is based on the above graph and that is based on a threshold value of 29°C, estimates that the next day is the special day (2), displaying, in the estimated reason display area Ar, that the setting pattern is the special day (2) pattern. Providing the graph area Gr makes it easy for the user to determine the validity of the estimated reason.

The user who has determined that the estimated reason is not valid may, for example, change the load setting value on the load setting screen, or change, on the calendar screen, the setting pattern that corresponds to a relevant day.

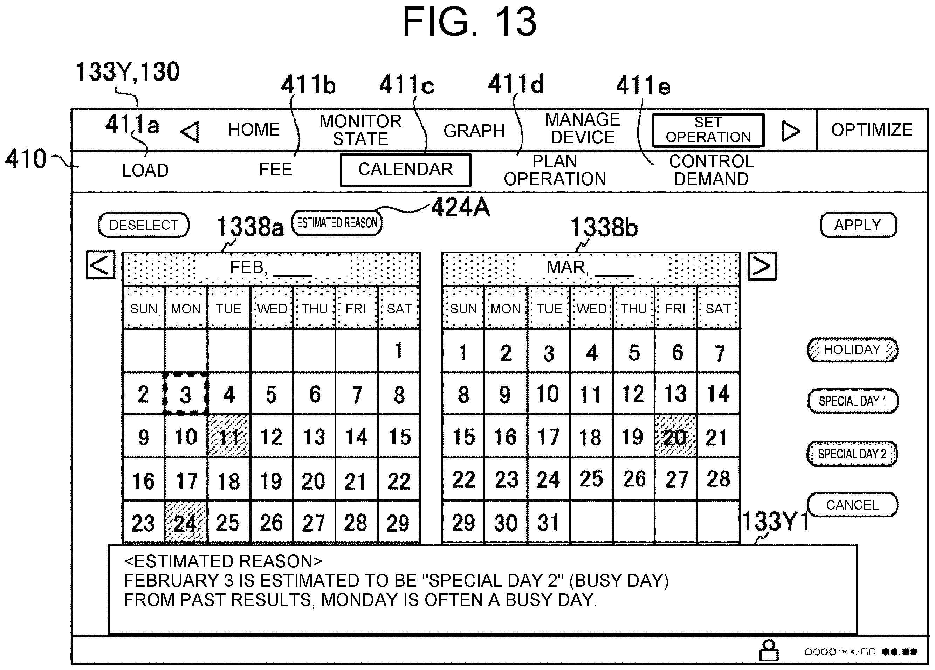

Fig. 13 is a schematic diagram showing a calendar screen 133Y of another modified example. As shown in Fig. 13, an estimated reason button 424A may be displayed on the calendar screen 133Y. The position of the estimated reason button 424A shown in Fig. 13 is an exemplification, and may be changed as needed. In the example shown in Fig. 13, operating, by touch or the like, the estimated reason button 424A with the calendar cell 1338c selected displays, in a pop-up manner, an estimated reason display screen 133Y1 that displays the estimated reason. In the example shown in Fig. 13, no graph area is provided on the estimated reason display screen 133Y1, but the graph area may be provided. The pop-up display is an exemplification, and the estimated reason display screen that displays the estimated reason may be switched from the calendar screen 133Y.

### [3-2-6. Operation Planning Screen]

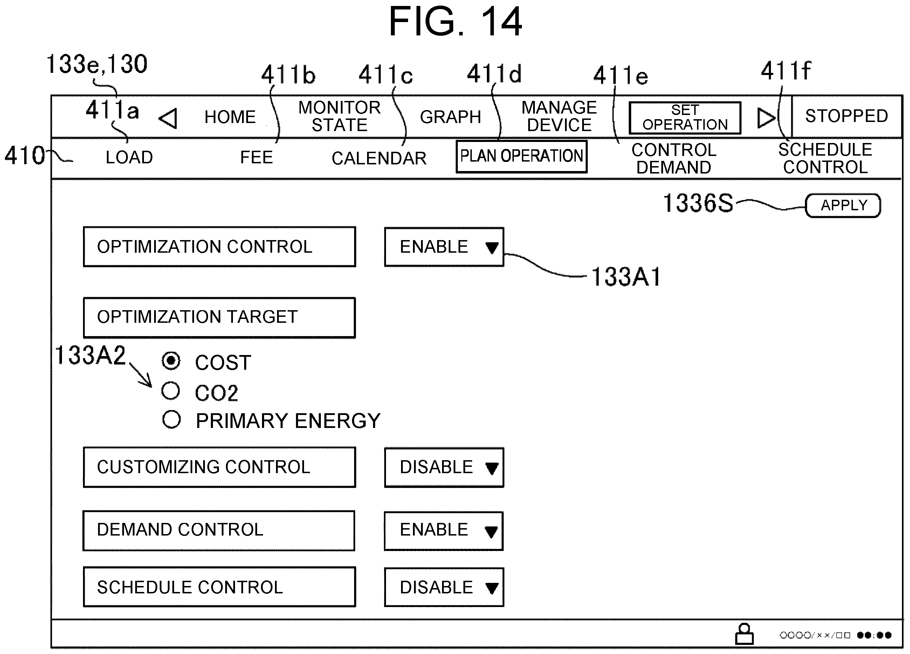

The operation planning screen displays the setting related to the control method of the management system 100. The operation planning screen is an entry screen that allows for the setting related to the control method of the management system 100. Fig. 14 is a schematic diagram showing a state of displaying an operation planning screen 133e on the screen 130 of the display unit 13. The operation planning screen 133e is displayed by selecting an operation planning button 411d displayed in the sub-menu area 410 on the operation setting screen 133.

In the present embodiment, as shown in Fig. 14, the operation planning screen 133e displays an enable/disable selection area 133A1 that allows for a selection between enabling and disabling of four control methods including the optimizing control, the customizing control, the demand control, and the schedule control. In detail, the operation planning screen 133e displays four enable/disable selection areas 133A1. Each enable/disable selection area 133A1 is displayed next to (right next to) the name of the control method. Each enable/disable selection area 133A1 displays both "Enable" and "Disable" characters when touched or otherwise operated. Selecting any of "Enable" and "Disable" displayed can determine whether to enable or disable. In the example shown in Fig. 14, "Enable" is selected for the optimizing control and the demand control, and "Disable" is selected for the customizing control and the schedule control.

The customizing control is a control method that is set according to a request of each customer using the management system 100, and can be considered a modified version of the optimizing control. Further, the scheduling control is a control method that controls a device according to the operation schedule settings for each device of the management system 100. The scheduling control is executed when, for example, the optimizing control is disabled or when there is no optimal planning value. The case of being no optimal planning value includes, for example, a case where an error occurs, failing to acquire the optimal planning value. Details of setting up the operation schedule are to be described below.

The optimizing control, the customizing control, the demand control, and the schedule control can be optionally switched between enabling and disabling, respectively. For example, in addition to the example shown in Fig. 14, with the optimizing control only enabled, the other control methods can be disabled, for example. Further, with the schedule control only enabled, the other control methods can be disabled, for example. For example, the optimizing control, the customizing control, the demand control, and the schedule control can all be set to be enabled. For example, all control methods including the optimizing control, the customizing control, the demand control, and the schedule control can be set to disabled.

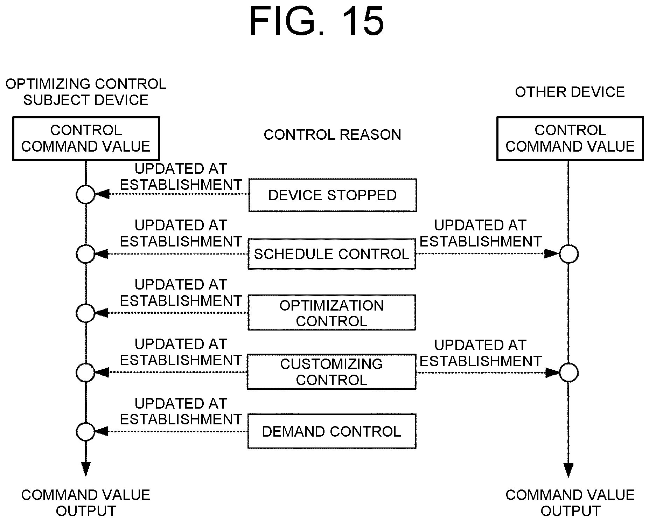

Fig. 15 is a diagram for describing an overview of a relation between control methods. In Fig. 15, an optimizing control subject device is a device that is possessed by the management system 100 and that is a subject of the optimizing control. Other devices are devices that are possessed by the management system 100 and that are not subjects of the optimizing control. All devices possessed by the management system 100 may be the optimizing control subject devices. Further, the devices possessed by the management system 100 may include the optimizing control subject device and the other device. All of the devices possessed by the management system 100 may be other devices.

As shown in Fig. 15, a control command value of each of the optimizing control subject devices is updated when five control reasons including "Device Stop", "Schedule Control", "Optimizing Control", "Customizing Control", and "Demand Control" are respectively established. In addition, a control command value of each of the other devices is updated when "Schedule Control" and "Customizing Control" are respectively established. Note that "Device Stop" is established when, for example, the schedule control, the optimizing control, the customizing control, and the demand control are all disabled.

For example, when only the schedule control is enabled on the operation planning screen 133e, the control command value will be output as a value updated by the establishment of the schedule control. For example, when only the optimizing control is enabled on the operation planning screen 133e, the control command value will be output as a value updated by the establishment of the optimizing control. For example, when the optimizing control and the schedule control are enabled on the operation planning screen 133e, the operation will be as follows. When the optimizing control is established as the control reason, the control command value will be output as a value updated by the establishment of the optimizing control. Meanwhile, when the optimizing control is not established as the control reason, the control command value will be output as a value updated by the establishment of the schedule control.

When multiple control reasons are established, the control command value finally output to each device has priority for the command value updated for the control reason described at the bottom in Fig. 15. For example, assume that the optimizing control and the demand control are enabled on the operation planning screen 133e. In this case, when the control reason for both the optimizing control and the demand control is established, the command value updated by the establishment of the demand control will be given priority to be output to the device.

As described above, the configuration of the present embodiment is proper for the configuration that includes the schedule control as a control method of the management system 100. The display unit 13 displays a setting switching screen (operation planning screen 133e) that allows for the switching between enabling and disabling of the schedule control. Further, the setting switching screen is so provided as to be switchable between enabling and disabling of a control method different from the schedule control. Control methods that differ from the scheduling control include the optimizing control that controls the device according to a predetermined optimization target. In detail, the control methods that differ from the schedule control include the optimizing control, the customizing control, and the demand control.

As shown in Fig. 14, in the present embodiment, the operation planning screen 133e displays an optimization target selection area 133A2 that allows for a selection of the type of the optimization target described above. In this example, the optimization target selection area 133A2 displays the characters "Cost" showing cost priority, "CO2" showing carbon dioxide emission priority, and "Primary Energy" showing primary energy consumption priority. By touch or the like, selecting the circled mark displayed to the left of each item can determine the type of optimization target.

As shown in Fig. 14, the operation planning screen 133e also displays an application button 1336S near the upper right side of the screen. By touch or the like, operating the application button 1336S can fix the selection result of the enable/disable selection area 133A1 in each control method, and the selection result of the optimization target selection area 133A2.

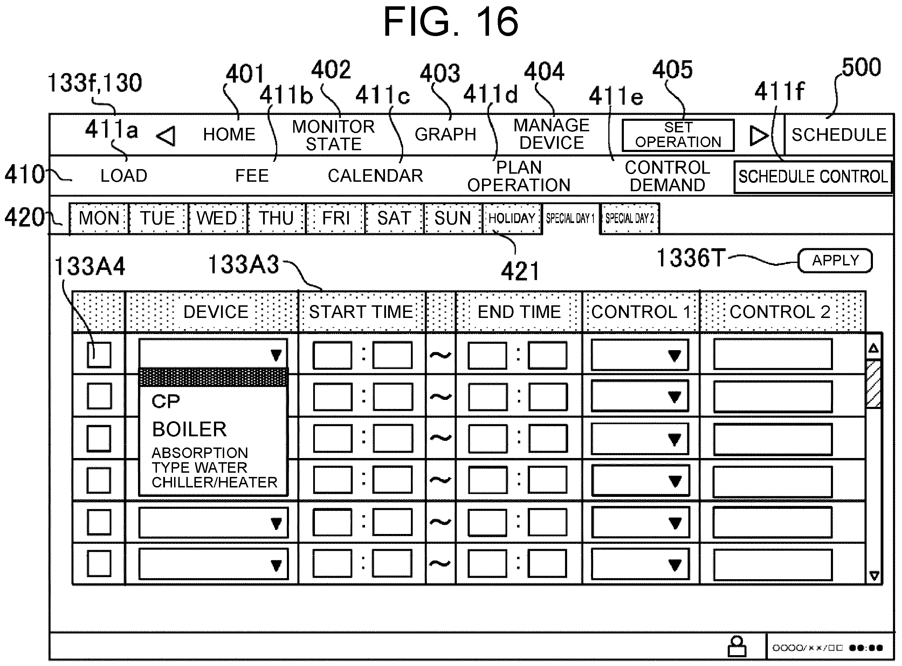

Further, in the present embodiment, the control method includes the schedule control, as described above. Due to this, as shown in Fig. 16 below, the control state display area 500 can display "Schedule" other than "Optimizing", "Demand," and "Stopped". That is, the display unit 13, during the executing of the schedule control that controls the device according to the setting of the operation schedule, displays that the schedule control is being executed.

As described above, the control state display area 500 is displayed on various screens, such as the home screen. That is, when the schedule control is being executed, "Schedule" showing that the schedule control is being executed is displayed in the control state display area 500, on a screen other than the screen shown in Fig. 13.

### [3-2-7. Schedule Setting Screen]

As described above, the display unit 13 shows the schedule setting screen. The schedule setting screen allows for a setting of the operation schedule for each device of the management system 100. The operation schedule for each device is entered by the schedule setting screen, making it possible to execute the schedule control when, for example, the optimizing control is disabled.

Fig. 16 is a schematic diagram showing a state of displaying a schedule setting screen 133f on the screen 130 of the display unit 13. Selecting the schedule control button 411f displayed in the sub-menu area 410 on the operation setting screen 133 selects the schedule setting screen 133f. In addition, the schedule setting screen 133f is displayed even when the schedule control is disabled on the operation planning screen 133e, making it possible to enter the operation schedule.

As shown in Fig. 16, on the schedule setting screen 133f as well, like on the load setting screen (see Fig. 5) and the fee setting screen (see Fig. 7), the tab area 420 is displayed below the sub-menu area 410. The tab area 420 displays ten different setting pattern tabs 421 including "Mon", "Tue", "Wed", "Thu", "Fri", "Sat", "Sun", "Holiday", "Special Day (1)", and "Special Day (2)".

That is, setting patterns of the schedule control include any of the Monday pattern, the Tuesday pattern, the Wednesday pattern, the Thursday pattern, the Friday pattern, the Saturday pattern, the Sunday pattern, the Holiday pattern, the special day (1) pattern, and the special day (2) pattern. The schedule setting screen 133f is so provided as execute displaying by switching for each type of day. Further, Fig. 16 shows the screen seen when the special day (1) tab of the ten setting pattern tabs 421 is selected.

As shown in Fig. 16, the schedule setting screen 133F displays a schedule setting table 133A3 below the tab area 420. The schedule setting table 133A3 is used, making it possible to enter the setting related to the schedule control.

It is preferable that items that can be set on the schedule setting screen 133f include at least one of the type of device, a time zone for executing control, and control content. It is more preferable that the items that can be set on the schedule setting screen 133f include at least the time zone for executing control. In the present embodiment, the items that can be set on the schedule setting screen 133f include the type of device, the time zone for executing control, and the control content. In detail, the setting items of schedule setting table 133A3 include the type of device, the time zone for control, and the control content.

In the schedule setting table 133A3, each of the multiple cells vertically arranged below "Device" is a portion for entering the subject device for setting the schedule control. For example, the "Device" can be set (entered) by selecting a registered device displayed by operating, such as touching, a relevant entry area (cell). In the example shown in Fig. 16, the registered devices include a CP, a boiler, and an absorption type water chiller/heater. The CP is a symbol indicating a cogeneration system. The number of registered devices can be optionally set, and may be other than three.

In the schedule setting table 133A3, each of the multiple cells vertically arranged below "Start Time" is a portion for entering the time to start the schedule control. Further, each of the multiple cells vertically arranged below "End Time" is a portion for entering the time to end the schedule control. The "Start Time" and "End Time" can be set (entered) by using, for example, a soft keyboard that appears by operating, such as touching, the relevant entry area (cell).

In the schedule setting table 133A3, each of the multiple cells vertically arranged below "Control 1" and "Control 2" is a portion for entering the specific control content of the device as the subject of the schedule control. In this example, the configuration allows for two types of control contents to be entered as control contents, but this is merely an exemplification. It may be so configured that only one type of control content can be entered, or three or more types can be entered.

The control content is determined by the type of the control subject device. In the present embodiment, "Control 1" is a portion for entering any digital (selecting one out of two) control content. The "Control 1" can be set (entered), for example, by selecting a to-be-displayed selection item by operating, such as touching, the relevant entry area (cell). For example, when the control subject device is the CP, "Enable" and "Disable" are displayed as selection items. For example, when the control subject device is a boiler or an absorption type water chiller/heater, "Operation" and "Stop" are displayed as selection items.

Further, in the present embodiment, the "Control 2" is a portion for entering an analogous control content. The "Control 2" can be set (entered) by using, for example, a soft keyboard that appears by operating, such as touching, the relevant entry area (cell). For example, when the control subject device is the CP or the boiler, a control command value for each device is entered. Entering the control command value automatically displays a unit. For example, when the control subject device is the CP, the control command value is a value related to the generated power, automatically displaying a unit kW after the entering of a numerical value. When the control subject device is the boiler, the control command value is a value related to a liquid temperature, automatically displaying a unit °C after the entering of the numerical value. In the present embodiment; when the control subject device is the absorption type water chiller/heater, Control 2 cannot be entered, as an example.

In the present embodiment, the schedule setting screen 133F displays a switching area 133A4 that allows for switching between enabling and disabling of the setting content for each device. The switching area 133A4 is, in detail, a check box area 133A4 displayed for each line at the leftmost end of the schedule setting table 133A3. The position of check box area 133A4 may be changed as needed, for example, may be placed at the right end instead of the left end.

Making an operation such as touching while a check mark (not shown) is not displayed in the check box area 133A4 displays the check mark in the check box area 133A4. Meanwhile, making the operation such as touching while the check mark is displayed in the check box area 133A4 deletes the check mark in the check box area 133A4.

When the check mark is displayed, the setting is considered enabled. When the check mark is not displayed, the relevant setting content is considered disabled even if a set value, etc. has been entered. Providing the above check box area 133A4 is convenient because the user only needs to execute the switching operation of the check box area 133A4 when wishing to temporarily make the switching operation between enabling and disabling of the schedule control.

In the present embodiment, the setting content newly set in the schedule setting screen 133f is fixed by operating, such as touching, an application button 1336T on the upper right side of the schedule setting table 133A3. If the application button 1336T is not operated after the new setting is entered, the management system 100 does not execute the operation that reflects the newly entered setting content.

In the present embodiment, the schedule setting screen 133f is so provided as to enable the setting that is made to correspond to the setting executed on the calendar screen 133d (see Fig. 9). In other words, the display unit 13 displays the calendar screen 133d which is so provided as to allow for the setting that is made to correspond to the setting executed on the schedule setting screen 133f.

In detail, the setting of the type of day on the schedule setting screen 133f and the setting of the type of day on the calendar screen 133d are made to correspond to each other. For example, assume that the setting of the calendar screen 133d on the operation day of the management system 100 is the Monday pattern. In this case, the schedule control is to be operated in the setting pattern displayed when the "Month" (setting pattern tab 421) is selected in the tab area 420 of the schedule setting screen 133f. Further, assume that the setting of the calendar screen 133d on the operation day of the management system 100 is the Special day (1) pattern, for example. In this case, the schedule control is to be operated in the setting pattern displayed when "Special day (1)" (setting pattern tab 421) is selected in the tab area 420 of the schedule setting screen 133f.

The following operation may be executed by using the fact that the setting of the type of day on the schedule setting screen 133f and the setting of the type of day on the calendar screen 133d are made to correspond to each other.

For example, when the date selected on the calendar screen 133d has the schedule control's setting pattern that corresponds to the type of day set for the above date, the calendar screen 133d may display to that effect in a pop-up manner. It is so configured that displaying the calendar screen 133d automatically selects the above date on the calendar screen 133d. In the above configuration, when the schedule control's setting pattern that corresponds to the type of day of the above date, the above pop-up display is to be executed at the same time as the displaying of the calendar screen 133d.

Further, for example, when the schedule setting screen 133f is displayed, the screen of the type of day same as the type of day set on the calendar screen 133d may be displayed as priority. Here, as an example, assume that the setting of the type of day on the calendar screen 133d on the day of displaying the schedule setting screen 133f is the special day (1). In this example, when the schedule control button 411f is operated thereby to display the schedule setting screen 133f, "Special Day (1)" is automatically selected in the tab area 420 thereby to display the schedule setting screen.

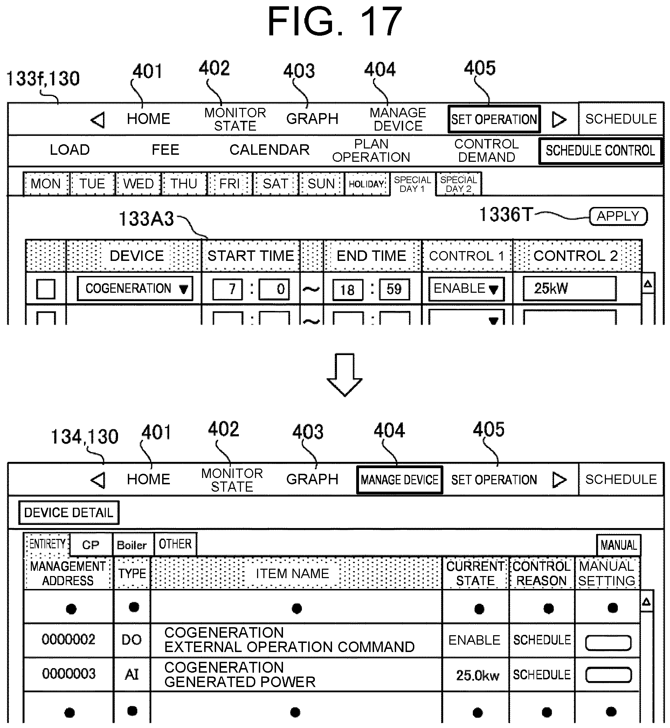

Fig. 17 is a diagram for describing the relation between the schedule setting screen 133f and a device management screen 134. In Fig. 17, the schedule setting screen 133f is shown at the upper step, and the device management screen 134 is shown in the lower step. In Fig. 17, the management system 100 executes the schedule control according to the setting of the schedule setting screen 133f.

In the present embodiment, as described above, the display unit 13 is so provided as to be capable of displaying the device management screen 134 that shows the control state of each device. The device management screen 134 is displayed by operating, such as touching, the device management button 404.

In the device management screen 134 shown in Fig. 17, the "Management Address" is an address defined in the control unit 11 (see Fig. 2). "Type" shows classification of input or output. "Item Name" is a specific name of a subject whose input or output is managed. "Current State" shows the current state of the input or output of each item managed by using the management address. "Control Reason" shows a control-related reason for the fact that the input or output of each item managed by using the management address is in the current state. "Manual Setting" displays information related to the manual setting of the input or output information of each item managed by using the management address.

As shown in Fig. 17, the device management screen 134 makes a displaying that reflects the setting of the schedule setting screen 133f. In detail, when the predetermined condition is satisfied, the device management screen 134 makes the displaying that reflects the setting of the schedule setting screen 133f. The predetermined condition is satisfied when the scheduling control is executed.

In the example shown in Fig. 17, it is so set that, on the schedule setting screen 133f, the upper command value of the generated power is enabled at 25 kW for the CP (cogeneration device) from 7:00 to 18:59. Then, when the schedule control that accords to the above setting pattern is executed, the device management screen 134 makes the displaying that reflects the setting of the schedule setting screen 133f. Specifically, the device management screen 134 displays that the item name "CP External Operation Command" is "Enabled" by "Schedule Control". In addition, the device management screen 134 displays that the item name "CP Power Upper Limit Command Value" is "25 kW".

### <4. Notes, etc.>

The various technical features disclosed in the present specification can be modified in various ways without departing from the gist of the technical creation thereof. Further, the multiple embodiments and modified examples shown in the present specification may be combined to the extent possible.

### <5. Appendices>

An exemplary display unit in the present specification is a display unit of a management system that manages energy, wherein the display unit may have a configuration where the display unit displays a schedule setting screen that enables a setting of an operation schedule for each device of the management system (first configuration).

The display unit of the first configuration may have a configuration where the display unit displays a setting switching screen that allows for a switching between enabling and disabling of a schedule control that controls the device according to the setting of the operating schedule (second configuration).

The display unit of the second configuration may have a configuration where the setting switching screen is so provided as to allow for the switching between enabling and disabling of a control method different from the schedule control (third configuration).

The display unit of the third configuration may have a configuration where the control method different from the schedule control includes an optimizing control that controls the device according to a predetermined optimization target (fourth configuration).

The display unit of any of the first to fourth configurations may have a configuration where the display unit displays a calendar screen that is so set as to allow for a setting that is made to correspond to the setting executed on the schedule setting screen (fifth configuration).

The display unit of the fifth configuration may have a configuration where the schedule setting screen is so provided as to be displayable by being switched for each type of day, and when the schedule setting screen is displayed, a screen of a type of day same as a type of day set on the calendar screen is displayed as priority (sixth configuration).

The display unit of any of the first to sixth configurations may have a configuration where the display unit is so provided as to be capable of displaying a device management screen that displays a control state of each device, and the device management screen makes a displaying that reflects the setting of the schedule setting screen (seventh configuration).

The display unit of any of the first to seventh configurations may have a configuration where an item settable on the schedule setting screen includes at least one of a type of the device, time for executing the control, and control content (eighth configuration).

The display unit of any of the first to eighth configurations may have a configuration where the schedule setting screen displays a switching area that allows for a switching between enabling and disabling of setting content for each device (ninth configuration).

The display unit of any of the first to ninth configurations may have a configuration where the display unit displays, during an executing of the schedule control that controls the device according to the setting of the operation schedule, that the schedule control is being executed (tenth configuration).

### REFERENCE SIGNS LIST

13: display unit
100: management system
133A4: check box area (switching area)
133, 133X: operation setting screen, load setting screen
133b: fee setting screen
133d, 133Y: calendar screen
133e: operation planning screen (setting switching screen)
133f: schedule setting screen
133X1, 133Y1: estimated reason display screen
134: device management screen
422: batch button
423: period setting button
1337: season selection button

## Claims

1. A display unit of a management system that manages energy, wherein
the management system has a plurality of setting patterns, and displays a setting screen that switches between the plurality of the setting patterns for each pattern and is capable of displaying a setting pattern of the setting patterns.

2. The display unit according to claim 1, wherein
the display unit further displays a calendar screen that allows for setting, using a calendar, which of the plurality of the setting patterns is to be applied on a predetermined day.

3. The display unit according to claim 1 or 2, wherein
the management system is so provided as to be able to estimate the setting pattern of the setting patterns to be applied at least on a next day, and further displays an estimated reason display screen showing an estimated reason for the setting pattern.

4. The display unit according to any one of claims 1 to 3, wherein
settings include a load setting which is related to a load, and a fee setting which is related to a fee, and
the setting screen is switched between a screen of the load setting and a screen of the fee setting and is capable of displaying the screens.

5. The display unit according to claim 4, wherein
the screen of the load setting displays a set value, for a predetermined time, of at least one of a power load, a hot heat load, and a cold heat load.

6. The display unit according to claim 4 or 5, wherein
the screen of the fee setting displays a season selection button that selects between a summer screen and a winter screen.

7. The display unit according to claim 6, wherein
the screen of the fee setting further displays a period setting button that sets a summer period and a winter period.

8. The display unit according to any one of claims 4 to 7, wherein
at least one of the screen of the load setting and the screen of the fee setting is a screen to allow for a manual entry of a set value of the load or of the fee.

9. The display unit according to claim 8, wherein
at least one of the screen of the load setting and the screen of the fee setting displays a batch button that displays a screen that allows the manual entry of the set value of the load or of the fee to be executed in a batch for the plurality of the setting patterns.

10. A display unit of a management system that manages energy, wherein
the display unit displays a schedule setting screen that enables a setting of an operation schedule for each device of the management system.

11. The display unit according to claim 10, wherein
the display unit displays a setting switching screen that allows for a switching between enabling and disabling of a schedule control that controls the device according to the setting of the operating schedule.

12. The display unit according to claim 11, wherein
the setting switching screen is so provided as to allow for the switching between enabling and disabling of a control method different from the schedule control.

13. The display unit according to claim 12, wherein
the control method different from the schedule control includes an optimizing control that controls the device according to a predetermined optimization target.

14. The display unit according to claim 10, wherein
the display unit displays a calendar screen that is so provided as to allow for a setting that corresponds to a setting executed on the schedule setting screen.

15. The display unit according to claim 14, wherein
the schedule setting screen is so provided as to be displayable by being switched for each type of day, and
when the schedule setting screen is displayed, a screen of a type of day same as a type of day set on the calendar screen is displayed as priority.

16. The display unit according to claim 10, wherein
the display unit is so provided as to be capable of displaying a device management screen that displays a control state of each device, and
the device management screen makes a displaying that reflects a setting of the schedule setting screen.

17. The display unit according to claim 10, wherein
an item settable on the schedule setting screen includes at least one of a type of the device, time for executing a control, and control content.

18. The display unit according to claim 10, wherein
the schedule setting screen displays a switching area that allows for a switching between enabling and disabling of setting content for each device.

19. The display unit according to any one of claims 10 to 18, wherein
the display unit, during an executing of a schedule control that controls the device according to the setting of the operation schedule, displays that the schedule control is being executed.
